# EUROPEAN PATENT APPLICATION

(11) **EP 3 871 901 A1**
(43) Date of publication of application: **01.09.2021**
(21) Application number: 19876615.6
(22) Date of filing: 25.10.2019
(51) Int. Cl.: B60C 1/00, B60C 15/04, B60C 15/06

(54) **TIRE**

(30) Priority: 26.10.2018 JP 2018201895
(71) Applicant: BRIDGESTONE CORPORATION, Chuo-ku Tokyo 104-8340 (JP)
(72) Inventor: YAMADA, Takumi, Tokyo 104-8340 (JP); FUDEMOTO, Hiroyuki, Tokyo 104-8340 (JP)
(74) Representative: Oxley, Robin John George
(86) International application number: PCT/JP2019/041949
(87) International publication number: WO 2020/085497

(57) **Abstract**

The bead portion (60) of the pneumatic tire (10) includes a bead structure (61) having a bead core (62) in which a bead cord (62 a) formed of a metal material is covered with a resin material, and a film-like member (64) covering the periphery of the bead structure (61). The film-like member (64) is formed of a material having a lower moisture permeability than the resin material.

## Description

### [Technical Field]

The present invention relates to a tire in which a part of a bead portion is formed of a resin material.

### [Background Art]

Conventionally, a tire having a bead core formed by embedding a metal bead cord in a thermoplastic resin has been known (See Patent literature 1.).

### [Citation List]

### [Patent Literature]

[PTL 1] Japanese Unexamined Patent Application Publication No. 2011-235835

### [Summary of Invention]

However, when using the bead core described above having the metal bead cord coated with a resin material, there are the following problems. Specifically, when the resin material covering the bead cord has high moisture permeability, the bead cord may corrode and rust may occur. Thus, the durability of the bead portion can be reduced.

Accordingly, an object of the present invention is to provide a tire in which a part of a bead portion is formed of a resin material and sufficient durability of the bead portion is secured.

One aspect of the present invention is a tire including a tread portion in contact with a road surface, a tire side portion continuous to the tread portion and positioned inside in the tire radial direction of the tread portion, and a bead portion continues to the tire side portion and positioned inside in the tire radial direction of the tire side portion. The bead portion includes a bead structure having a bead core in which a bead cord formed of a metal material is coated with a resin material, and a film-like member covering the periphery of the bead structure. The film-like member is formed of a material having lower moisture permeability than the resin material.

### [Brief Description of Drawings]

FIG. 1 is a cross-sectional view of a pneumatic tire 10.
FIG. 2 is a partially enlarged cross-sectional view of the pneumatic tire 10.

### [Description of Embodiments]

Embodiments will be described below with reference to the drawings. The same functions and configurations are denoted by the same or similar reference numerals, and descriptions thereof are omitted as appropriate.

### (1)Overall schematic configuration of the tire

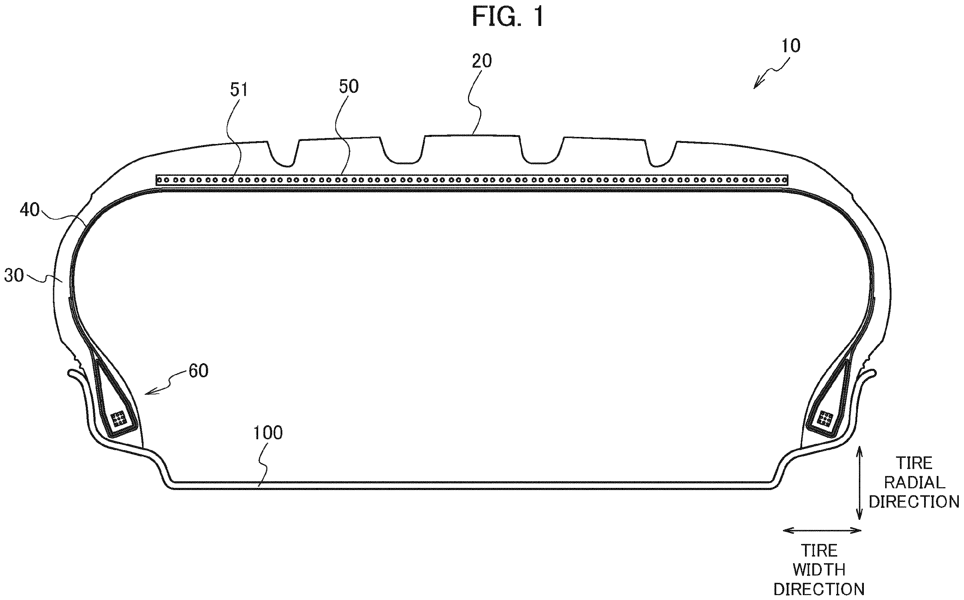

FIG. 1 is a sectional view of the pneumatic tire 10 according to the present embodiment. Specifically, FIG. 1 is a cross-sectional view of a pneumatic tire 10 along tire width direction and tire radial direction. In FIG. 1, the sectional hatching is not shown (hereinafter the same).

As shown in FIG. 1, the pneumatic tire 10 includes a tread portion 20, a tire side portion 30, a carcass ply 40, a belt layer 50, and a bead portion 60.

The tread portion 20 is a part contacting with a road surface (unillustrated). On the tread portion 20, a pattern (unillustrated) corresponding to the use environment of the pneumatic tire 10 and the kind of a vehicle to be mounted is formed.

The tire side portion 30 continues to the tread portion 20 and is positioned inside the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass ply 40 forms a skeleton of the pneumatic tire 10. The carcass ply 40 has a radial structure in which carcass cords (unillustrated) arranged radially along the tire radial direction are covered with a rubber material. However, the present invention is not limited to a radial structure, and may be a bias structure in which the carcass cords are arranged so as to cross each other in the tire radial direction.

The carcass cord is not particularly limited, and can be formed of an organic fiber cord in the same manner as a tire for a standard passenger car.

The belt layer 50 is provided inside the tire radial direction of the tread portion 20. The belt layer 50 is a single-layer spiral belt having a reinforcing cord 51 and the reinforcing cord 51 is covered with a resin. However, the belt layer 50 is not limited to a single-layer spiral belt. For example, the belt layer 50 may be a two-layer interlaced belt covered with rubber.

As the resin for covering the reinforcing cord 51, a resin material having a tensile modulus higher than that of a rubber material constituting the tire side portion 30 and a rubber material constituting the tread portion 20 are used. As the resin for covering the reinforcing cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), etc.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75-2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to the tire side portion 30 and positioned inside the tire radial direction of the tire side portion 30. The bead portion 60 has an annular shape extending in the tire circumferential direction.

A part of the bead portion 60 is made of a resin material appropriately selected from the above-mentioned resin materials. In this embodiment, a part of the bead portion 60 is formed of the same resin material as that used for the belt layer 50.

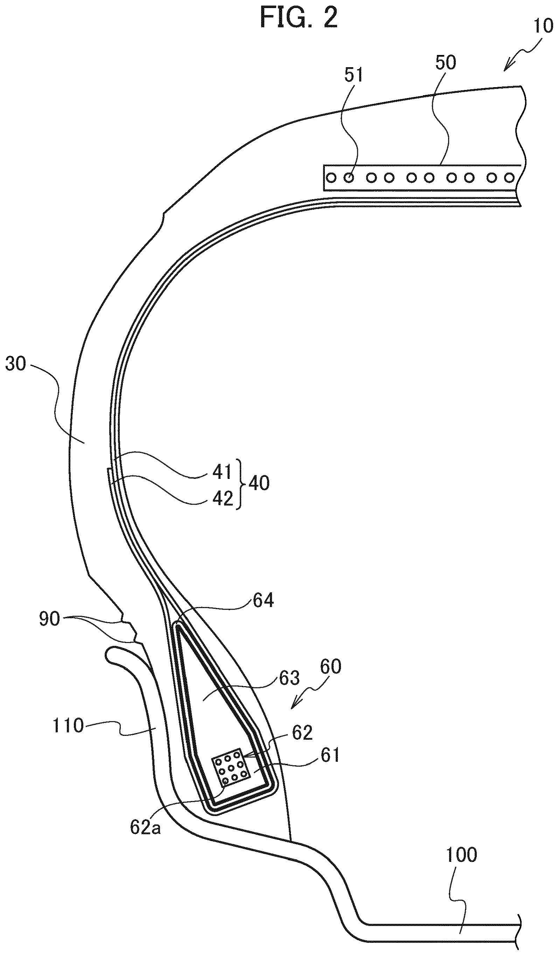

The bead portion 60 is locked to a flange part 110 (Not shown in FIG. 1, see FIG. 2) formed on the radial outside end of the rim wheel 100.

An inner liner (unillustrated) for preventing air (or a gas such as nitrogen) filled in the internal space of the pneumatic tire 10 assembled to the rim wheel 100 from leaking is stuck to the tire inner side surface of the pneumatic tire 10.

### (2)Outline of Bead portion

FIG. 2 is a partially enlarged sectional view of the pneumatic tire 10. Specifically, FIG. 2 is a partially enlarged cross-sectional view of the pneumatic tire 10 including the bead portions 60 along the tire width direction and the tire radial direction.

As shown in FIG. 2, the carcass ply 40 is folded back outside of the tire width direction through the bead portion 60. Specifically, the carcass ply 40 includes a body portion 41 and a folded portion 42.

The body portion 41 is provided over the tread portion 20, the tire side portion 30 and the bead portion 60, and is a part until it is folded in the bead portion 60, specifically, the bead core 62.

The folded portion 42 is a portion continued to the body portion 41 and folded back to the outside of the tire width direction via the bead core 62.

The bead portion 60 includes a bead structure 61 having the bead core 62 and a bead filler 63. The bead core 62 is formed by coating a bead cord 62 a formed of a metal material (For example, steel.) with a resin material.

In this embodiment, the bead filler 63 is continuous with the bead core 62. Specifically, the bead core 62 and the bead filler 63 are integrally formed. The bead filler 63 is formed of the same resin material as that used for the bead core 62. The bead filler 63 becomes thinner toward the outside of the tire radial direction.

The resin material used for the bead core 62 and the bead filler 63 may be the same as the resin material used for the belt layer 50. However, when the bead core 62 and the bead filler 63 are not integrally formed, the bead core 62 and the bead filler 63 may not necessarily be formed of the same resin material as that used for the belt layer 50. That is, as long as the resin material can be used for the belt layer 50, the resin materials used for the belt layer 50, the bead core 62, and the bead filler 63 may be different.

The bead portion 60 further includes a film-like member 64. The film-like member 64 covers the periphery of the bead structure 61. As described above, the bead portion 60 is annular extending in the tire circumferential direction, and the bead structure 61 is also annular extending in the tire circumferential direction.

The film-like member 64 covers the whole circumference of the annular bead structure 61 extending in the tire circumferential direction. The film-like member 64 is preferably formed of a material having a lower moisture permeability than the resin material used for the bead structure 61.

Specifically, the film-like member 64 is preferably formed of at least one of a polyolefin (PO) resin, a polyamide (PA) resin, a polyvinyl alcohol resin, and a styrenic elastomer. The film-like member 64 may be formed of a mixed resin (PA/PO, PA/TPS, EVOH/TPS, EVOH/PO) in which both resins are mixed. In the case of the mixed resin, a compatibilizer may be added. Examples of the compatibilizer include an acid-modified olefinic elastomer, an acid-modified styrenic elastomer, an epoxy-modified olefinic elastomer, and an epoxy-modified styrenic elastomer.

The thickness of the film-like member 64 is preferably 1.0 mm or less. The lower limit of the thickness is not particularly limited as long as the moisture-proof property to the bead structure 61 can be secured, and the manufacturability and durability above a certain level can be achieved. In consideration of these requirements, the thickness of the film-like member 64 is preferably 10 µm or more.

In this embodiment, the outer tire radial direction end of the bead structure 61 is located at tire radial direction at approximately the same height as the rim line 90.

### (3)Function and effects

According to the embodiment described above, the following effects can be obtained. Specifically, the entire periphery of the bead structure 61 having a bead core 62 in which a metal bead cord 62 a is coated with a resin material is covered with a film-like member 64. The film-like member 64 is formed of a material having a moisture permeability lower than that of the resin material covering the bead cord 62 a.

Therefore, external moisture does not permeate into the bead structure 61. Thus, the metal bead cord 62 a is prevented from corroding and rusting. That is, the durability of the bead core 62 is improved.

That is, in the pneumatic tire 10, the sufficient durability of the bead portion can be secured while a part of the bead portion 60 is formed of a resin material.

As described above, the film-like member 64 is preferably formed of at least one of a polyolefin (PO) resin, a polyamide (PA) resin, a polyvinyl alcohol (EVOH) resin, and a styrenic elastomer (TPS). By using the resin, the securing of the moisture-proof property by the film-like member 64 and the durability of the film-like member 64 can be made compatible at a high level.

The thickness of the film-like member 64 is preferably 1.0 mm or less. Thus, flexibility can be imparted to the film-like member 64, and damage to the film-like member 64 such as crack occurrence can be prevented.

### (4)Other Embodiments

Although the contents of the present invention have been described above with reference to the examples, it will be obvious to those skilled in the art that the present invention is not limited to these descriptions and that various modifications and improvements are possible.

For example, in the above-described embodiment, the bead core 62 and the bead filler 63 are integrally formed, but the bead core 62 and the bead filler 63 may be formed separately. In this case, the bead filler 63 may be formed of a resin material or a rubber material.

Depending on the type and size of the pneumatic tire 10, the bead filler 63 may be omitted.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

10 Pneumatic tire
20 Tread portion
30 Tire side portion
40 Carcass ply
41 Body portion
42 Folded portion
50 Belt layer
51 Reinforcement cord
60 Bead portion
61 Bead structure
62 Bead Core
62a Bead cord
63 Bead filler
64 Film-Like member
100 Rim wheels
110 flange portion

## Claims

1. A tire comprising:
a tread portion in contact with a road surface;
a tire side portion continuous to the tread portion and positioned inside in the tire radial direction of the tread portion; and
a bead portion continues to the tire side portion and positioned inside in the tire radial direction of the tire side portion,
wherein the bead portion includes:
a bead structure having a bead core in which a bead cord formed of a metal material is coated with a resin material; and
a film-like member covering the periphery of the bead structure,
wherein the film-like member is formed of a material having lower moisture permeability than the resin material.

2. The tire according to claim 1, wherein the film-like member is formed of at least one of a polyolefin resin, a polyamide resin, a polyvinyl alcohol resin, and a styrenic elastomer.

3. The tire according to claim 1, wherein the thickness of the film-like member is 1.0 mm or less.
